Europäisches Patentamt

(19) European Patent Office

Office européen des brevets

(11) Numéro de publication: **0 353 169**
A1

# (12) DEMANDE DE BREVET EUROPEEN

(21) Numéro de dépôt: 89420274.6

(51) Int. Cl.⁵: **B 62 M 3/08**

(22) Date de dépôt: 25.07.89

(30) Priorité: 28.07.88 FR 8810525

(43) Date de publication de la demande:
31.01.90 Bulletin 90/05

(84) Etats contractants désignés:
AT BE CH DE ES FR GB GR IT LI LU NL SE

(71) Demandeur: BG INNOVATIONS
6 rue René-Ampère Z. I. des Cézardes
F-74600 Seynod (FR)

(72) Inventeur: Lacombe, Jean-Pierre
Corbier
F-74650 Chavanod (FR)

(74) Mandataire: Maureau, Philippe et al
Cabinet GERMAIN & MAUREAU BP 3011
F-69392 Lyon Cédex 03 (FR)

(54) Dispositif de fixation d'une chaussure sur une pédale de bicyclette.

(57) Ce dispositif comprend une pédale constituée par un corps (5) portant l'axe d'articulation sur une manivelle et équipé à son extrémité avant d'une butée (6) destinée à recevoir l'extrémité avant d'une plaquette fixée sous la chaussure. Sur le corps (5) est montée pivotante, autour d'un axe perpendiculaire au plan de la pédale, une pièce (12) portant un levier (16) de fixation de l'extrémité arrière de la plaquette.

FIG. 1

EP 0 353 169 A1

## Description

### Dispositif de fixation d'une chaussure sur une pédale de bicyclette

La présente invention a pour objet un dispositif de fixation d'une chaussure sur une pédale de bicyclette.

Lors de la pratique du sport cycliste, il est indispensable, pour obtenir un rendement optimal, que le cycliste fixe ses pieds sur les pédales de la bicyclette. Ceci lui permet d'exercer sur les manivelles une action non seulement lors de la descente de l'une des pédales, mais également lors de la remontée de l'autre pédale.

Une solution traditionnelle pour réaliser la fixation d'une chaussure sur une pédale consiste à équiper celle-ci d'un cale-pied, qui consiste en une sorte de cage ajourée et ouverte vers l'arrière dans laquelle le cycliste engage un pied, qui est maintenu bloqué par l'intermédiaire d'une sangle refermant le cale-pied.

Cette solution ne donne pas entière satisfaction du fait qu'elle nécessite de la part du cycliste des opérations de serrage et de déserrage manuelles des sangles de fermeture des cale-pied, que le pied est plus ou moins comprimé en fonction du serrage de la sangle, ce qui nuit au confort du cycliste ainsi qu'à ses performances, et que le cycliste ne peut pas dégager rapidement les pieds hors des cale-pied, ce qui constitue un facteur de danger, notamment en cas de chute.

Aussi a-t-il été imaginé de réaliser un dispositif de fixation d'une chaussure sur une pédale, dans lequel la pédale comprend à son extrémité avant, une butée, et à son extrémité arrière, un levier articulé, la butée et le levier étant destinés à coopérer avec une plaquette fixée sous la chaussure, pour réaliser la fixation de cette dernière. La fixation de la chaussure sur la pédale est réalisé automatiquement, sous l'effet de la pression du pied, cette fermeture étant réalisée de façon similaire à celle des fixations de skis automatiques.

La butée avant étant en forme de surface cylindrique, complémentaire de la forme de l'extrémité avant de la plaquette, il suffit pour désolidariser la chaussure de la pédale d'exercer un mouvement de rotation du pied vers l'extérieur ou vers l'intérieur. Cette solution est intéressante du fait qu'elle permet une fixation et une désolidarisation automatiques de la chaussure vis-à-vis d'une pédale, y compris en cas de chute, puisque lors d'une chute il se produit toujours un léger mouvement de rotation de la chaussure vers l'intérieur ou vers l'extérieur. Enfin, les pieds du cycliste ne sont plus comprimés par les sangles des cale-pied, ce qui constitue un facteur de confort.

Toutefois, ce dispositif présente l'inconvénient que chaque pied du cycliste est bloqué dans l'axe de la pédale, sans possibilité ni de réglage, ni de mouvement angulaire au cours du pédalage. Or, il serait souhaitable, en fonction de la morphologie de chaque utilisateur, de pouvoir régler l'angle que forme l'axe de la chaussure avec l'axe de la pédale. En outre, d'autres cyclistes souhaiteraient pouvoir bénéficier au cours du mouvement de pédalage, d'une certaine latitude de pivotement de leurs pieds, afin de permettre par exemple lorsqu'ils sont en position "danseuse" et que la bicyclette subit des oscillations latérales, de maintenir leurs pieds dans l'axe de la route.

La présente invention vise à fournir un dispositif de liaison entre une chaussure et une pédale d'une bicyclette qui permette un chaussage et un déchaussage automatiques, ainsi qu'une possibilité de réglage de la position angulaire de la chaussure par rapport à la pédale.

A cet effet, ce dispositif constitué par une pédale comportant un corps monté pivotant à l'extrémité d'une manivelle, dont l'extrémité avant comporte une butée surélevée par rapport au plan de la pédale, et disposée selon un tronçon de surface cylindrique, dont le centre est situé du côté du milieu de la pédale, cette butée comportant au niveau de son bord supérieur, un retour tourné vers l'arrière, et dont l'extrémité arrière est équipée d'un levier monté pivotant autour d'un axe parallèle à l'axe de la pédale et comportant à sa partie supérieure un bec tourné vers l'avant, cette pédale étant destinée à coopérer avec une plaquette fixée sur la face inférieure de la chaussure et comportant des extrémités de forme complémentaire respectivement de la butée avant et du levier arrière, est caractérisé en ce que la butée avant est solidaire du corps de la pédale, tandis que le levier de fixation arrière est solidaire d'une pièce montée sur le corps de la pédale, avec possibilité de rotation autour d'un axe qui est perpendiculaire au plan de la pédale et disposé au niveau de la génératrice située le plus en avant du tronçon de surface cylindrique formant la butée.

Il est ainsi possible à l'utilisateur de faire pivoter son pied par rapport à la butée avant qui joue le rôle de point d'articulation.

Selon une forme d'exécution de ce dispositif, le corps de la pédale est constitué par une pièce de forme annulaire dont l'extrémité avant est munie de la butée et dont la partie arrière est équipée d'un palier servant au montage de l'axe de la manivelle, cette partie arrière présentant une face tournée vers l'avant, constituée par un tronçon de surface cylindrique d'axe perpendiculaire au plan de la pédale, et disposé au niveau de la génératrice de la butée, située le plus en avant, tandis que la pièce portant le levier comporte un évidement tourné vers le haut, destiné à permettre son emboîtement sur la partie arrière du corps, cet évidement étant limité du côté avant par une branche dont la face postérieure est en forme de tronçon de surface cylindrique complémentaire de celle du corps, la face supérieure de la pièce portant le levier servant à la fixation d'une plaque recouvrant pour partie la face supérieure du corps de la pédale.

En pratique, il est procédé au montage de la pièce pivotante sur le corps de la pédale, par emboîtement de l'une sur l'autre, puis à la fixation de la plaque de recouvrement sur la pièce pivotante, qui empêche la désolidarisation des deux premiers éléments, tout en permettant un mouvement de pivotement relatif.

Conformément à une autre caractéristique de l'invention, les moyens de guidage en rotation de la pièce pivotante par rapport au corps comprennent en outre des tronçons de surfaces cylindriques complémentaires ménagés à l'extrémité postérieure du corps, et sur la paroi en regard de la pièce pivotante.

Avantageusement, le corps de la pédale est réalisé en un alliage métallique léger, la pièce pivotante est réalisée en une matière synthétique dure, telle que celle connue sous la marque DELRIN et la plaque de recouvrement est en acier inoxydable. Ce choix de matériaux est particulièrement judicieux, car permettant d'assurer un glissement de la pièce pivotante sur le corps avec un minimum de friction. Afin de limiter les frottements, une plaquette réalisée en matière synthétique à haut coefficient de glissement, est interposée entre la face supérieure de la partie du corps formant palier pour l'axe, et la plaque de recouvrement.

Selon une forme préférée de réalisation de ce dispositif, celui-ci comprend des moyens de réglage angulaire et/ou de blocage en rotation de la pièce pivotante, par rapport au corps.

Conformément à une possibilité, ces moyens sont constitués par deux vis engagées dans deux trous taraudés ménagés dans le corps et débouchant de part et d'autre de celui-ci, et destinés à venir prendre appui sur les extrémités de la branche avant de la pièce pivotante. En fonction du vissage de ces deux vis, il est possible, soit de bloquer la pièce pivotante dans la position angulaire souhaitée, soit de laisser un certain jeu entre la pièce pivotante et les extrémités des vis pour permettre une latitude de pivotement en cours de pédalage.

De toute façon, l'invention sera bien comprise à l'aide de la description qui suit, en référence au dessin schématique annexé représentant, à titre d'exemple non limitatif, une forme d'exécution de ce dispositif :

Figure 1 est une vue en perspective d'une pédale équipée de ce dispositif ;

Figure 2 en est une vue en coupe longitudinale selon la ligne II-II de figure 1 ;

Figure 3 en est une vue de dessus partiellement arrachée.

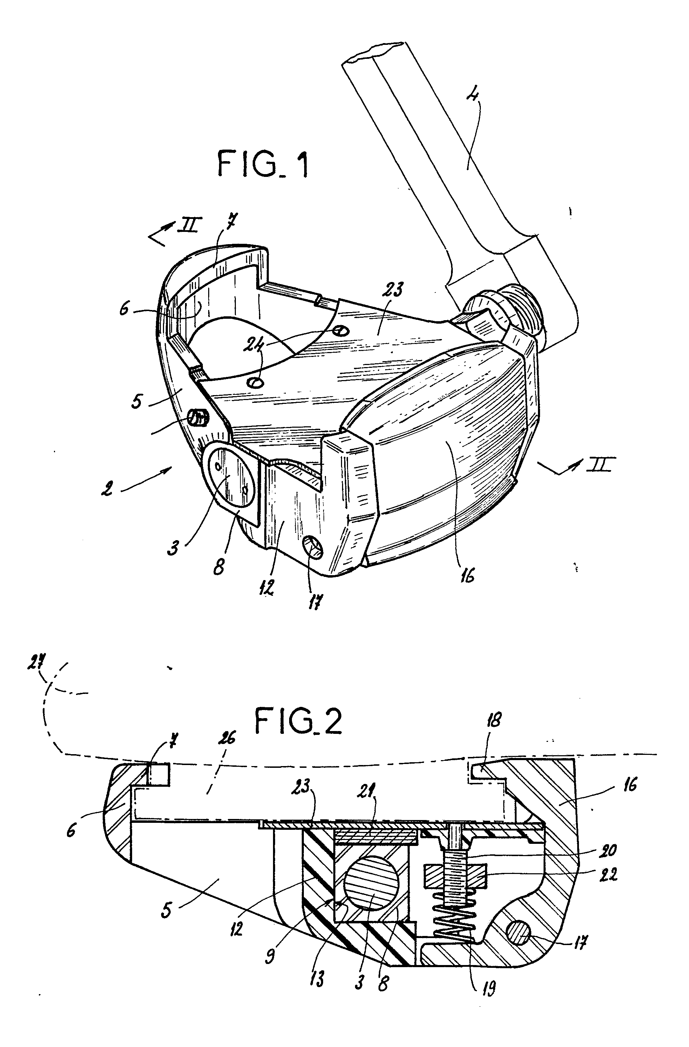

La figure 1 représente une pédale désignée par la référence générale 2, montée pivotante à l'aide d'un axe 3, à l'extrémité d'une manivelle 4 d'une bicyclette. Cette pédale comprend un corps 5 réalisé en alliage léger, possédant une forme générale annulaire, et légèrement triangulaire en vue de dessus. L'extrémité avant du corps 5 comporte une butée 6 en forme de tronçon de surface cylindrique dont l'axe est situé du côté du centre de la pédale, le bord supérieur de cette butée formant un retour 7 tourné vers l'arrière. La partie arrière 8 du corps sert au montage de l'axe 3 et comporte une face avant 9 en forme de tronçon de surface cylindrique, centrée sur un axe perpendiculaire au plan de la pédale, et sur la génératrice 10 de la butée 6, située le plus en avant.

Cette pédale comprend également une pièce 12 réalisée en une matière synthétique tel que du DELRIN comportant un évidement tourné vers le haut, permettant son emboîtement de bas en haut, sur la branche arrière 8 du corps 5. La branche de la pièce 12 délimitant l'évidement du côté de l'avant de celui-ci, comporte une face postérieure 13 en forme de tronçon de surface cylindrique, de forme complémentaire de celle de la surface 9. La coopération entre les surfaces 9 et 13 permet d'assurer un guidage en rotation de ces deux éléments, l'un par rapport à l'autre, ce guidage en rotation étant complété par appui de tronçons de surface cylindrique de même axe, 14 et 15, ménagés respectivement sur la partie arrière du corps et sur la face en regard de la pièce 12. L'extrémité postérieure de la pièce 12 est équipée d'un levier 16, monté pivotant autour d'un axe 17, parallèle à l'axe 3 de la pédale, et dont l'extrémité supérieure comporte un retour 18 vers l'avant. Ce levier 16 est normalement maintenu en position basculée vers l'avant, représentée au dessin, sous l'action de deux ressorts 19, dont la tension est réglable par l'intermédiaire d'une vis 20, appuyant sur un étrier 22 actionnant les ressorts.

Après emboîtement de la pièce pivotante sur le corps 5, ces deux éléments sont maintenus assemblés par une plaque 23 en acier inoxydable, fixée par des vis 24 sur la pièce 12, et recouvrant pour partie le corps 5 sans perturber le pivotement de la pièce 12 vis-à-vis du corps. Ce mouvement de pivotement est d'ailleurs favorisé en interposant entre la partie du corps 5 servant au montage de l'axe 3 et la plaque 23 une plaquette 21 en matière synthétique à haut coefficient de glissement.

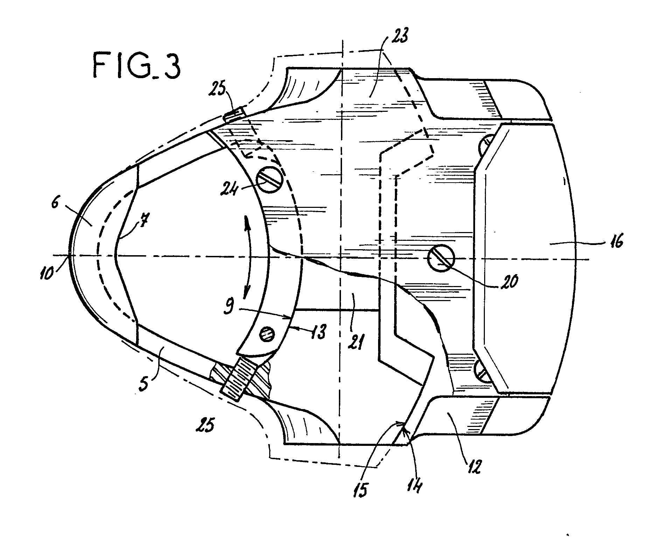

Il ressort de la structure décrite ci-dessus que la pièce 12 peut pivoter par rapport au corps 5 autour de l'axe 10. Comme montré à la figure 3, ce mouvement de pivotement peut être limité par deux vis 25 engagées dans le corps 5 de part et d'autre de celui-ci et prenant appui sur les extrémités de la branche avant de la pièce 12. Ces vis 25 peuvent soit servir au blocage angulaire de la pièce 12, dans une position déterminée, les deux positions extrêmes étant montrées à la figure 3 en traits mixtes, soit être fixées de façon à ménager un certain jeu entre leurs extrémités et la pièce 12, afin de permettre un certain mouvement de rotation de cette pièce 12 par rapport au corps 5.

En pratique, l'utilisation de ce dispositif est effectuée comme dans le cas d'un dispositif traditionnel par engagement d'une plaquette 26 fixée sous la semelle d'une chaussure 27, entre la butée 6 et le levier 16.

Comme il ressort de ce qui précède, l'invention apporte une grande amélioration à la technique existante, en fournissant un dispositif automatique de fixation d'une chaussure sur une pédale permettant également un réglage de la position angulaire de la chaussure par rapport à la pédale.

Comme il va de soi, l'invention ne se limite pas à la seule forme d'exécution de ce dispositif décrite ci-dessus à titre d'exemple ; elle en embrasse au contraire toutes les variantes de réalisation.

## Revendications

1. Dispositif de fixation d'une chaussure sur une pédale de bicyclette, constitué par une pédale comportant un corps monté pivotant à l'extrémité d'une manivelle, dont l'extrémité avant comporte une butée surélevée par rapport au plan de la pédale, et disposée selon un tronçon de surface cylindrique, dont le centre est situé du côté du milieu de la pédale, cette butée comportant au niveau de son bord supérieur, un retour tourné vers l'arrière, et dont l'extrémité arrière est équipée d'un levier monté pivotant autour d'un axe parallèle à l'axe de la pédale et comportant à sa partie supérieure un bec tourné vers l'avant, cette pédale étant destinée à coopérer avec une plaquette fixée sur la face inférieure de la chaussure et comportant des extrémités de forme complémentaire respectivement de la butée avant et du levier arrière, caractérisé en ce que la butée avant (6) est solidaire du corps (5) de la pédale, tandis que le levier de fixation arrière (16) est solidaire d'une pièce (12) montée sur le corps de la pédale, avec possibilité de rotation autour d'un axe qui est perpendiculaire au plan de la pédale et disposé au niveau de la génératrice située le plus en avant du tronçon de surface cylindrique formant la butée.

2. Dispositif selon la revendication 1, caractérisé en ce que le corps (5) de la pédale est constitué par une pièce de forme annulaire dont l'extrémitéavant est munie de la butée (6) et dont la partie arrière (8) est équipée d'un palier servant au montage de l'axe (3) de la manivelle, cette partie arrière présentant une face tournée vers l'avant, constituée par un tronçon (9) de surface cylindrique d'axe (10) perpendiculaire au plan de la pédale, et disposé au niveau de la génératrice de la butée, située le plus en avant, tandis que la pièce (12) portant le levier (16) comporte un évidement tourné vers le haut destiné à permettre son emboîtement sur la partie arrière du corps, cet évidement étant limité du côté avant par une branche dont la face postérieure (13) est en forme de tronçon de surface cylindrique complémentaire de celle (9) du corps, la face supérieure de la pièce (12) portant le levier servant à la fixation d'une plaque (23) recouvrant pour partie la face supérieure du corps de la pédale.

3. Dispositif selon la revendication 2, caractérisé en ce que les moyens de guidage en rotation de la pièce pivotante (12) par rapport au corps (5) comprennent en outre des tronçons de surfaces cylindriques complémentaires (14,15) ménagés à l'extrémité postérieure du corps, et sur la paroi en regard de la pièce pivotante.

4. Dispositif selon la revendication 3, caractérisé en ce que le corps (5) de la pédale est réalisé en un alliage métallique léger, la pièce pivotante (12) est réalisée en une matière synthétique dure, telle que celle connues sous la marque DELRIN et la plaque de recouvrement (23) est en acier inoxydable.

5. Dispositif selon la revendication 4, caractérisé en ce qu'une plaquette (21) réalisée en matière synthétique à haut coefficient de glissement, est interposée entre la face supérieure de la partie (8) du corps formant palier pour l'axe, et la plaque de recouvrement (23).

6. Dispositif selon l'une quelconque des revendications 1 à 5, caractérisé en ce qu'il comprend des moyens de réglage angulaire et/ou de blocage en rotation, de la pièce pivotante par rapport au corps.

7. Dispositif selon la revendication 6, caractérisé en ce que ces moyens sont constitués par deux vis (25) engagées dans deux trous taraudés ménagés dans le corps (5) et débouchant de part et d'autre de celui-ci (5), et destinés à venir prendre appui sur les extrémités de la branche avant de la pièce pivotante (12).

FIG_1

FIG_2

FIG.3

Office européen
des brevets

# RAPPORT DE RECHERCHE EUROPEENNE

Numero de la demande

EP 89 42 0274

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 058 438 (I.C. BADERSBACH) * Résumé; figures * | 1,4-7 | B 62 M 3/08 |
| A | EP-A-0 146 454 (J. BERNARD) * Résumé; figures; page 5, ligne 3 - page 6, ligne 35 * | 1,4 | |
| A | FR-A-2 518 041 (H. KUPPER) * Figures 9-12; page 6, ligne 17 - page 7, ligne 24 * | 1 | |

DOMAINES TECHNIQUES RECHERCHES (Int. Cl.5)

B 62 M

Le présent rapport a été établi pour toutes les revendications

| Lieu de la recherche | Date d'achèvement de la recherche | Examinateur |
|---|---|---|
| LA HAYE | 31-10-1989 | FRANKS B.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)